(19) Europäisches Patentamt
European Patent Office
Office européen des brevets

(11) Veröffentlichungsnummer: **0 473 148 A1**

# (12) EUROPÄISCHE PATENTANMELDUNG

(21) Anmeldenummer: **91114489.7**

(22) Anmeldetag: **29.08.91**

(51) Int. Cl.$^5$: **C08F 220/28**, C09D 133/14

(30) Priorität: **31.08.90 DE 4027594**

(43) Veröffentlichungstag der Anmeldung:
**04.03.92 Patentblatt 92/10**

(84) Benannte Vertragsstaaten:
**AT BE CH DE DK ES FR GB GR IT LI NL SE**

(71) Anmelder: **Herberts Gesellschaft mit beschränkter Haftung**
**Christbusch 25**
**W-5600 Wuppertal 2(DE)**

(72) Erfinder: **Luttenberger, Johannes**
**Haferfeldweg 14**
**A-8053 Graz(AT)**
Erfinder: **Zima, Herbert, Dr.**
**Eichenweg 7**
**A-8042 Graz(AT)**
Erfinder: **Wilfinger, Werner, Dr.**
**Händelstrasse 52**
**A-8042 Graz(AT)**
Erfinder: **Kriessmann, Ingo, Dr.**
**Hilmteichstrasse 75**
**A-8010 Graz(AT)**
Erfinder: **Schäffer, Hermann, Dr.**
**Kreuzstrasse 49**
**W-5600 Wuppertal 2(DE)**

(74) Vertreter: **Türk, Gille, Hrabal**
**Brucknerstrasse 20**
**W-4000 Düsseldorf 13(DE)**

## (54) Wasserverdünnbares Copolymerisat, dessen Herstellung und Verwendung, sowie wässrige Überzugsmittel.

(57) 2.1. Es sollen Copolymerisate bereitgestellt werden, die Überzüge mit besonders guter Wasserbeständigkeit ermöglichen.

2.2. Das Copolymerisat basiert auf Alkyl- und Hydroxyalkylestern von $\alpha,\beta$-ethylenisch ungesättigten Carbonsäuren und gegebenenfalls copolymerisierbaren Vinylmonomeren, hat eine Säurezahl von 20 bis 50 und eine OH-Zahl von 40 bis 90 und enthält einpolymerisiert 0,5 bis 5 Gew.%, bezogen auf das Gewicht der zu seiner Herstellung eingesetzten Monomeren, eines oder mehrerer Perfluoralkylethylester von $\alpha,\beta$-ethylenisch ungesättigten Carbonsäuren mit 6 bis 18 C-Atomen im Alkylteil.

2.3. Wäßrige Überzugsmittel für die Herstellung wasserbeständiger Filme.

EP 0 473 148 A1

Die Erfindung betrifft durch Neutralisation mit organischen Basen wasserverdünnbare, Hydroxylgruppen und Carboxylgruppen enthaltende Copolymerisate auf der Basis von Alkylestern und Hydroxyalkylestern $\alpha,\beta$-ethylenisch ungesättigter Carbonsäuren, die in wäßrigen Überzugsmitteln eingesetzt werden können. Die Erfindung betrifft auch wäßrige Überzugsmittel, die derartige Copolymerisate enthalten.

In der EP-A-0 212 508 werden Fluor enthaltende Copolymere beschrieben. Es handelt sich um Polyvinylalkohole, deren Hydroxylgruppe durch eine fluorierte Fettsäure verestert sind. Diese Copolymeren werden als Bindemittel für wäßrige Lacke eingesetzt. Es handelt sich um wasserlösliche Materialien. Diese Bindemittel sollen einen verbesserten Glanz und eine verbesserte Härte ergeben. In der DE-OS 33 39 212 werden wäßrige Beschichtungsmassen beschrieben, die zu Filmen mit einer besonders guten Wasserbeständigkeit führen sollen. Dies wird erreicht durch Bereitstellung einer Dispersion mit Teilchen, die einen Aufbau ähnlich Zwiebelschalen aufweisen. Es wird hier ein komplizierter Weg zur Herstellung wasserbeständiger Filme beschrieben.

Aufgabe der Erfindung ist die Bereitstellung von Überzugsmitteln, die zu Filmen mit besonders guter Wasserbeständigkeit, bei guter Untergrundhaftung und hohem Glanze, führen.

Es hat sich gezeigt, daß diese Aufgabe gelöst werden kann durch die Bereitstellung von wasserverdünnbaren Copolymerisaten, die einen oder mehrere Perfluoralkylethylester von $\alpha,\beta$ -ethylenisch ungesättigten Carbonsäuren einpolymerisiert enthalten, wobei derartige Copolymerisate wäßrigen Überzugsmitteln zugesetzt werden können.

Gegenstand der Erfindung ist daher ein wasserverdünnbares, Hydroxylgruppen und Carboxylgruppen enthaltendes, vernetzbares Copolymerisat auf der Basis von Alkylestern und Hydroxyalkylestern $\alpha,\beta$ -ethylenisch ungesättigter Carbonsäuren, wobei die Alkylreste durch ein oder mehrere Sauerstoffatome unterbrochen sein und der Alkylrest der Hydroxyalkylester eine oder mehrere Hydroxylgruppen aufweisen können, $\alpha,\beta$ -ethylenisch ungesättigten Carbonsäuren und Vinylmonomeren, mit einer Säurezahl von 20 bis 50 und einer OH-Zahl von 40 bis 90, daß 0,5 bis 5 Gew.%, bezogen auf das Gewicht der zu seiner Herstellung eingesetzten Monomeren, eines oder mehrerer Perfluoralkylethylester von $\alpha,\beta$ -ethylenisch ungesättigten Carbonsäuren mit 6 bis 18 C-Atomen im Alkylteil einpolymerisiert enthält.

Die Perfluoralkylethylalkohole, die den Perfluoralkylethylestern zugrundeliegen, haben die allgemeine Formel

$HO-CH_2-CH_2-C_nF_{2n+1}$

worin n = 4 bis 16 ist.

Es hat sich gezeigt, daß die Kombination derartiger Copolymerisate mit vernetzbaren wäßrigen Dispersionen und Härtern auf Aminoharzbasis in wäßrigen Überzugsmitteln zu Überzügen führt, die eine verbesserte Untergrundhaftung und -benetzung, einen hohen Glanz sowie eine verbesserte Wasserbeständigkeit aufweisen.

Die erfindungsgemäßen Copolymerisate können hergestellt werden durch Copolymerisation folgender Monomerer:

A) Alkylester von $\alpha,\beta$-ethylenisch ungesättigten Carbonsäuren. Als $\alpha,\beta$-ungesättigte Carbonsäuren kommen beispielsweise Acrylsäure und/oder Methacrylsäure in Betracht.
Die Alkylester können von Alkylalkoholen mit 1 bis 18 Kohlenstoffatomen stammen, wobei derartige Alkohole auch Polyether-Alkohole sein können; d.h. die Alkylreste können durch ein oder mehrere Sauerstoffatome unterbrochen sein. Bevorzugt weisen die Alkohole 4 bis 8 Kohlenstoffatome auf. Besonders bevorzugte Beispiele sind Butylalkohol und 2-Ethylhexylalkohol. Diese Alkohole sind besonders bevorzugt mit Acrylsäure oder Methacrylsäure verestert.

Bevorzugte Beispiele für verwendbare Alkylester $\alpha,\beta$-ethylenisch ungesättigter Carbonsäuren sind Butylacrylat, Butylmethacrylat, 2-Ethylhexylacrylat und 2-Ethylhexylmethacrylat.

B) Hydroxyalkylester von $\alpha,\beta$-ethylenisch ungesättigten Carbonsäuren. Als bevorzugte Beispiele für $\alpha,\beta$-ethylenisch ungesättigte Carbonsäuren kommen Acrylsäure und/oder Methacrylsäure infrage. Diese sind bevorzugt verestert mit Alkylalkoholen mit 2 oder mehreren OH-Gruppen mit 2 bis 18 C-Atomen. Es kann sich auch um Polyetheralkohole mit 2 oder mehreren OH-Gruppen handeln, d.h. der Alkylrest kann durch ein oder mehrere Sauerstoffatome unterbrochen sein. Die Alkohole weisen außer der veresterten Hydroxylgruppe eine oder mehrere, bevorzugt eine weitere Hydroxylgruppe auf.

Beispiele für derartige Alkohole sind Ethylenglykol, Propylenglykol, Diethylenglykol, Triethylenglykol, Dipropylenglykol und Tripropylenglykol.

Bevorzugte Beispiele für verwendbare Ester sind 2-Hydroxyethylacrylat, 2-Hydroxyethylmethacrylat, 4-Hydroxybutylacrylat, 2-Hydroxypropylacrylat, Tripropylenglykolacrylat und Tripropylenglykolmethacrylat.

C) $\alpha,\beta$-ethylenisch ungesättigten Carbonsäuren. Beispiele sind Acrylsäure und Methacrylsäure.

D) Gegebenenfalls Vinylmonomeren, insbesondere aromatischen Vinylmonomeren, wie Styrol und seinen Derivaten.

E) Perfluoralkylethylester von $\alpha,\beta$-ethylenisch ungesättigten Carbonsäuren mit 4 bis 18 C-Atomen und bevorzugt 4 bis 14 C-Atomen im Alkylrest. Beispiele für $\alpha,\beta$-ethylenisch ungesättigte Carbonsäuren, die diesen Estern zugrundeliegen, sind Acrylsäure und Methacrylsäure. Beispiele für verwendbare Ester sind Perfluorbutylethylacrylat, Perfluorbutylethylmethacrylat, Perfluorhexylethylacrylat, Perfluorhexylethylmethacrylat, Perfluordodecylethylacrylat und Perfluordodecylethylmethacrylat.

Die Perfluoralkylethylester von $\alpha,\beta$-ethylenisch ungesättigten Carbonsäuren werden in Mengen von 0,5 bis 5 Gew.%, bezogen auf das Gewicht der gesamten eingesetzten polymerisierbaren Monomeren, verwendet.

F) Zur Herstellung der erfindungsgemäßen Copolymerisate können weitere mono-, di- und mehrfunktionelle copolymerisierbare Monomere verwendet werden. Zur Erzielung hoher Läufergrenzen (die Lackfilmstärke, ab der der Lackfilm von einer senkrecht gestellten Fläche abzulaufen beginnt) ist es günstig, polyfunktionelle Radikalketten-Überträger bei der Copolymerisation mitzuverwenden. Beispiele für polyfunktionelle Radikalketten-Überträger sind tri- oder tetrafunktionelle Radikalketten-Überträger, beispielsweise auf der Basis von Thioglykolsäureestern des Glycerins, des Trimethylolpropans und des Pentaerythrits. Derartige mehrfunktionelle Radikalketten-Überträger führen zu sternförmigen Molekülen.

Die Auswahl der Mengenverhältnisse für die Herstellung der erfindungsgemäßen Copolymerisate erfolgt so, daß Hydroxyl- und Carboxylgruppen enthaltende Copolymerisate entstehen, die eine Säurezahl von 20 bis 50, bevorzugt 30 bis 40 mg KOH/g, und eine Hydroxylzahl (OH-Zahl) von 40 bis 90, bevorzugt 55 bis 70 mg KOH/g, erzielt wird.

Beispielsweise können 40 bis 70 Gew.%, bevorzugt 40 bis 50 Gew.% der vorstehenden Komponente A), 10 bis 30 Gew.% der vorstehend genannten Komponente B), 3 bis 10 Gew.% der Komponente C), 0 bis 30 Gew.%, bevorzugt 20 bis 30 Gew.% der Komponente D) und bis zu 3 Gew.%, bevorzugt 0,5 bis 3 Gew.% der Komponente F) umgesetzt werden. Der Anteil der Perfluoralkylethylester, Komponente E), beträgt 0,5 bis 5 Gew.%.

Die Copolymerisation zur Herstellung der erfindungsgemäßen Copolymerisate erfolgt in üblicher Weise unter Verwendung üblicher Hilfs- und Zusatzstoffe, wie beispielsweise Katalysatoren.

Die erfindungsgemäßen Copolymerisate können in verschiedener Form bereitgestellt werden. Beispielsweise können sie in Form von Lösungen in organischen Lösemitteln vorliegen. Sie können jedoch auch nach Neutralisation mit organischen Basen, beispielsweise Aminen, wie Triethylamin, Dimethylethanolamin, N-Methylmorpholin in Form lösemittelhaltiger wäßriger Lösungen vorliegen. Das neutralisierte Copolymerisat kann ohne Lösemittel auch in Form wäßriger Dispersionen vorliegen. Geeignete Lösemittel für die Bereitstellung der organischen Lösungen oder der wäßrigen Lösungen sind Glykolether oder Diglykolether, wie 2-n-Butoxyethanol oder Dipropylenglykolmonomethylether.

Die erfindungsgemäßen Copolymerisate eignen sich besonders für die Herstellung von Überzugsmitteln auf wäßriger Basis. Derartige Überzugsmittel enthalten bevorzugt wäßrige Dispersionen vernetzbarer Harze, und einen oder mehrere Vernetzer.

Die erfindungsgemäßen Copolymerisate können wäßrigen Überzugsmitteln in einem breiten Mengenbereich zugesetzt werden. Beispielsweise sind Gemische aus 10 bis 50 Gew.% der erfindungsgemäßen Copolymerisate mit 30 bis 80 Gew.% eines oder mehrerer vernetzbarer Harze in Form einer wäßrigen Dispersion und 10 bis 50 Gew.% eines oder mehrerer Vernetzer für das vernetzbare Harz möglich, wobei sich die Gewichtsprozente jeweils auf den Festkörpergehalt der Harze beziehen und auf 100 Gew.% addieren.

Beispiele für vernetzbare in Wasser dispergierte Emulsionspolymerisate (Dispersionen) sind Hydroxylgruppen und/oder Carboxylgruppen enthaltende Copolymerisate auf der Basis von Estern und hydroxylgruppenhaltigen Estern von $\alpha,\beta$-ethylenisch ungesättigten Carbonsäuren, wie sie vorstehend für die Herstellung der erfindungsgemäßen Copolymeren beschrieben wurden. Als Comonomere können beispielsweise $\alpha,\beta$-ethylenisch ungesättigte Carbonsäuren dienen, die dem fertigen Copolymerisat Carboxylgruppen vermitteln. Weitere copolymerisierbare Comonomere, wie Vinylverbindungen, beispielsweise aromatische Vinylverbindungen, wie Styrol, können zur Herstellung der vernetzbaren Harzdispersionen mitverwendet werden.

Beispiele für derartige $\alpha,\beta$-ethylenisch ungesättigte Carbonsäuren, deren Ester, hydroxylgruppenhaltige Ester und Vinylverbindungen sind die vorstehend für die Herstellung der erfindungsgemäßen Copolymerisate genannten Monomeren.

Solche Acrylatdispersionen können nach bekannten Verfahren hergestellt werden, wie beispielsweise in

F. Hölscher "Dispersionen synthetischer Hochpolymerer, Teil I: Eigenschaften, Herstellung und Prüfung" und der dort zitierten Literatur zitiert.

Ein bevorzugtes Beispiel für vernetzbare Polymerisate, die als wäßrige Dispersionen vorliegen, wird in der AT-PS 325 740 beschrieben. Dort werden 45 bis 80 Gew.% Acrylsäurealkylester und/oder Methacrylsäurealkylester mit 1 bis 8 C-Atomen im Alkylteil, wie Methylmethacrylat, Butylacrylat, Butylmethacrylat und/oder Ethylhexylacrylat, mit 10 bis 20 Gew.% eines vinylaromatischen Monomeren, wie Styrol, 1 bis 3 Gew.% Methacrylsäure und/oder Acrylsäure und 10 bis 25 Gew.% Polyalkylenglykolmethacrylaten in Gegenwart anionischer Emulgatoren und radikalischer Initiatoren einer Emulsions-Copolymerisation in bekannter Weise unterzogen. Eine für die erfindungsgemäßen wäßrigen Überzugsmittel besonders geeignete wäßrige vernetzbare Polymerisatdispersion wird danach erhalten durch Copolymerisation von
25 bis 35 Gew.% Butylmethacrylat,
10 bis 25 Gew.% Ethylhexylacrylat und/oder n-Butylacrylat,
10 bis 20 Gew.% Methylmethacrylat,
10 bis 20 Gew.% Styrol,
1 bis 30 Gew.% Methacrylsäure und/oder Acrylsäure sowie
10 bis 25 Gew.% Polypropylenglykolmonomethacrylat und/oder Polyethylenglykolmonomethacrylat.

Die Polymerisation erfolgt in Gegenwart anionischer, sowie gegebenenfalls nicht-ionischer Emulgatoren und radikalischer Initiatoren in wäßriger Emulsion.

Zur Vernetzung können übliche wasserlösliche und/oder wasserdispergierbare Vernetzer auf Aminoharzbasis, wie Melamin-Formaldehyd-Kondensationsprodukte verwendet werden. Derartige Vernetzer sind dem Fachmann geläufig. Beispielsweise können die Methylolgruppen solcher Melamin-Formaldehyd-Kondensationsprodukte teilweise oder vollständig mit Monoalkoholen verethert sein. Geeignet sind auch Melaminharze, wie die handelsüblichen Hexamethoxymethylmelaminharze (z.B. die Handelsprodukte Cymel 301 und Cymel 303; derartige Vernetzer können beispielsweis zusammen mit Vernetzungskatalysatoren, wie Aminsalzen der p-Toluolsulfonsäure oder Nonylnaphthyldisulfonsäure eingesetzt werden). Partiell methoxymethylierte Melaminharze (z.B. die Handelsprodukte Cymel 325 oder Cymel 327) können ohne Säurekatalysatoren eingesetzt werden.

Zur Bereitung der erfindungsgemäßen wäßrigen Überzugsmittel werden im allgemeinen 30 bis 80 Gew.% eines oder mehrerer der vernetzbaren Harze in Form einer wäßrigen Dispersion mit 10 bis 50 Gew.% eines oder mehrerer der erfindungsgemäßen Copolymerisate und 10 bis 50 Gew.% eines oder mehrerer Vernetzer für das vernetzbare Harz vermischt, wobei sich die genannten Gewichtsprozente auf den jeweiligen Harz-Festkörper beziehen und auf 100 Gew.% addieren.

Die wäßrigen Dispersionen weisen im allgemeinen einen Harz-Festkörpergehalt in der Größenordnung von 35 bis 50 Gew.%, bei einem Lösemittelgehalt von 15 bis 25 Gew.% und einem Wassergehalt von 30 bis 50 Gew.%, auf.

In den Festkörpergehalt von 35 bis 50 Gew.% mit einbezogen sein können auch übliche Additive, wie die vorstehend genannten Vernetzungskatalysatoren (die beispielsweise in Mengen von 0,3 bis 5 Gew.% vorliegen), jedoch auch weitere Additive, die auf dem Sektor von Überzugsmitteln und Lacken üblich sind, wie Pigmente, Füllstoffe, Verlaufsmittel (z.B. siliconhaltige Verlaufsmittel), Lichtschutzmittel und weitere Additive, die dem Fachmann geläufig sind.

Die Bereitung der erfindungsgemäßen wäßrigen Überzugsmittel kann durch Vermischen der Bestandteile erfolgen. Beispielsweise kann das erfindungsgemäße mit einer geeigneten organischen Base, z.B. einem Amin, neutralisierte fluorhaltige Copolymerisat gelöst in einem organischen Lösemittel, wie einem Ether, z.B. Glykolether, wie Butyldiglykol, zusammen mit Additiven verrührt und gegebenenfalls zusammen mit dem Vernetzerharz vorgelegt werden. Bei Verwendung eines Härtungskatalysators kann dieser beispielsweise in neutralisierter Form gelöst in einer Mischung aus Wasser und organischem Lösemittel (z.B. Glykolen, wie Butylglykol) zu der vorgelegten Lösung gefügt und eingerührt werden. Die erhaltene Mischung kann mit einer derartigen Wassermenge versetzt werden, daß beim Zumischen der Dispersion keine Ausfällung auftritt. Anschließend wird die wäßrige vernetzbare Polymerisatdispersion zugefügt. Die vorstehende Arbeitsweise stellt jedoch lediglich ein Beispiel für ein mögliches Vermischen der Bestandteile dar.

Die erfindungsgemäßen Überzugsmittel können für verschiedene Anwendungszwecke formuliert werden. Beispielsweise können ohne Zusatz von Pigmenten ausgezeichnete Klarlacke formuliert werden. Es ist jedoch auch der Zusatz von Pigmenten möglich, wobei der Einsatz von farbgebenden Pigmenten und/oder Effektpigmenten geeignet ist. Als Effektpigmente können beispielsweise plättchenförmige Pigmente, wie Metallicpigmente, zur Erzielung von Metalliceffekten eingearbeitet werden.

Die erfindungsgemäßen Überzugsmittel können somit zur Herstellung von Mehrschichtüberzügen eingesetzt werden. Sie eignen sich besonders gut für den Einsatz auf dem Kraftfahrzeugsektor, beispielsweise zur Herstellung von Unilacken, Metalliclacken und bevorzugt Klarlacken.

Die erfindungsgemäßen Überzugsmittel können in verschiedener Weise appliziert werden, beispielsweise durch Streichen, Rakeln, Spritzen oder elektrostatisch. Die erfindungsgemäßen Überzugsmittel weisen einen ausgezeichneten Verlauf und Glanz auf.

Durch die erfindungsgemäßen Copolymerisate bzw. Überzugsmittel, die derartige Copolymerisate enthalten, wird es möglich, Filme mit ausgezeichneter Haftung auf verschiedenen Substraten, beispielsweise Metallsubstraten, Kunststoffsubstraten, aber auch vorbeschichteten Substraten, auszubilden. Die Filme weisen eine ausgezeichnete Wasserbeständigkeit auf.

Herstellung der erfindungsgemäßen Perfluoralkylethylester enthaltenden Copolymerisate

**Beispiel 1 bis 9**

Es wurden die in der nachstehenden Tabelle 1 angegebenen Monomeren in den dort angegebenen Mengenverhältnissen copolymerisiert. Die Grenzviskositätszahl, der Festkörpergehalt sowie die Hydroxyl- und Säurezahlen der erhaltenen Copolymerdispersionen sind ebenfalls in der nachstehenden Tabelle I angegeben.

Tabelle I

| Beispiel | 1 | 2 | 3 | 4 | 5 | 6 |
|---|---|---|---|---|---|---|
| Perfluorbutylethylacrylat | 1 | 1 | - | - | - | - |
| Perfluorhexylethylmethacrylat | - | - | 1 | 1 | - | - |
| Perfluordodecylethyl-methacrylat | - | - | - | - | 1 | 1 |
| Styrol | 28 | 28 | 25 | 28 | 25 | 28 |
| 2-Ethylhexylacrylat | - | 21 | - | 23 | 48 | 20 |
| Butylacrylat | 45 | 22 | 48 | 20 | - | 23 |
| Tripropylenglykolmethacrylat | 9 | 12 | 9 | 12 | 9 | 12 |
| 4-Hydroxybutylacrylat | - | - | - | - | - | - |
| 2-Hydroxyethylmethacrylat | 12 | 10 | 12 | 10 | 12 | 10 |
| 2-Hydroxypropylacrylat | - | - | - | - | - | - |
| Methacrylsäure | 5 | 6 | 5 | 6 | 5 | 6 |
| Acrylsäure | - | - | - | - | - | - |
| polyfunktioneller Regler* | 2 | 2 | 2 | 2 | 2 | 2 |
| [$\eta$] 2 % $CHCl_3$ (ml/g) | 8,2 | 7,9 | 9,4 | 8,8 | 7,2 | 7,9 |
| Festkörper % | 70 | 70 | 70 | 70 | 70 | 70 |
| OH-Zahl (mg KOH/g) | 65,0 | 60,8 | 65,0 | 60,8 | 65,0 | 60,8 |
| Säurezahl (mg KOH/g) | 32,6 | 39,1 | 32,6 | 39,1 | 32,6 | 39,1 |

* Pentaerythrittetrathioglykolsäureester

..... Fortsetzung Tabelle I

| Beispiel | 7 | 8 | 9 |
|---|---|---|---|
| Perfluorbutylethylacrylat | - | 0,5 | - |
| Perfluorhexylethylmethacrylat | 2 | - | - |
| Perfluordodecylethyl-methacrylat | - | - | 4 |
| Styrol | 28 | 25 | 24 |
| 2-Ethylhexylacrylat | 20 | 23 | - |
| Butylacrylat | 24 | 30,5 | 44 |
| Tripropylenglykolmethacrylat | 5 | 6 | 12 |
| 4-Hydroxybutylacrylat | 20 | - | - |
| 2-Hydroxyethylmethacrylat | - | - | 12 |
| 2-Hydroxypropylacrylat | - | 10 | - |
| Methacrylsäure | - | - | 4 |
| Acrylsäure | 6 | 5 | - |
| polyfunktioneller Regler* | 2 | 2 | 2 |
| [η] 2 % $CHCl_3$ (ml/g) | 8,6 | 8,9 | 7,5 |
| Festkörper % | 70 | 70 | 70 |
| OH-Zahl (mg KOH/g) | 85,1 | 51,9 | 69,4 |
| Säurezahl (mg KOH/g) | 46,7 | 38,9 | 26,0 |

* Pentaerythrittetrathioglykolsäureester

Herstellung der erfindungsgemäßen Perfluoralkylethylester enthaltenden Lösungscopolymerisate

Allgemeine Arbeitsvorschrift für die Herstellung

In einem mit Rückflußkühler, Zugabegefäß, Thermometer, Inertgasleitung, Heizung und Kühlung sowie Rührwerk ausgestatteten Reaktionsgefäß wird unter Inertgasabdeckung Dipropylenglykolmonomethylether als Lösemittel vorgelegt und auf 145°C erwärmt. Aus dem Zugabegefäß wird die Mischung aus Monomeren, polyfunktioneller Regler und Di-tert.-Butylperoxid (3 - 5 % auf die Monomeren berechnet) während 4 bis 6 Stunden zulaufen gelassen. Nach Zulaufende hält man 2 weitere Stunden bei 145°C, um den Umsatz zu vervollständigen.

Herstellung einer wäßrigen Polymerisatdispersion (Acrylatdispersion)

In einem Polymerisationsrührwerk löst man
a) 3 Teile Natriumlaurylethoxylatsulfat

9,8 Teile ethoxyliertes Octylphenol (mit 16 Mol Ethylenoxid)
2 Teile Ammoniumpersulfat und
1090 Teile deionisiertes Wasser,
erwärmt die Lösung auf 75°C und läßt innerhalb von 90 Minuten eine Mischung aus
b) 225 Teilen Butylmethacrylat,
225 Teilen Ethylhexylacrylat,
162 Teilen Methylmethacrylat,
180 Teilen Styrol,
90 Teilen Polypropylenglykolmonomethacrylat,
18 Teilen Acrylsäure und
4,4 Teilen tert.-Dodecylmercaptan
zulaufen. Während des Zulaufens erhöht man die Temperatur langsam auf 85°C. Nach Beendigung des Zulaufes werden 28 Teile eines mit 25 Mol Ethylenoxid umgesetzten $C_{12}$-$C_{14}$-Fettalkohols und 3 Teile eines mit 3 Mol Ethylenoxid umgesetzten und dann sulfierten Octylphenols, gelöst in 100 Teilen Wasser, zugegegeben. Zur Vervollständigung des Umsatzes wird die Temperatur auf 95°C gesteigert und während 10 min gehalten. Nach dem Abkühlen erhält man eine sehr stabile Dispersion mit einem Festkörpergehalt von 49 %.

Zur Verarbeitung wird die Dispersion mit einem Alkanolamin, z.B. Dimethylethanolamin, auf einen pH-Wert von 7,5 eingestellt.

Herstellung von Wasserklarlacken

**Beispiel 10 bis 18**

Es wurden Wasserklarlacke durch Vermischen der in der nachfolgenden Tabelle II angegebenen Bestandteile hergestellt. Die erhaltenen Klarlacke wurden auf einen Metallic-Basislack, der 5 min bei 80°C angetrocknet worden war, in zwei Spritzgängen in einer Schichtdicke von 35 - 40 µm Trockenfilmstärke aufgetragen und 30 min bei 140°C eingebrannt. Die erhaltenen Überzüge wurden auf Haftung (Gitterschnitt-Test), Steinschlag, Beständigkeit im Schwitzkasten (240 Stunden bei 40°C) sowie auf den Glanzgrad und die Läufergrenze untersucht. Die erhaltenen Ergebnisse sind ebenfalls in der nachstehenden Tabelle II aufgeführt.

Tabelle II

| Beispiel | 10 | 11 | 12 | 13 | 14 | 15 |
|---|---|---|---|---|---|---|
| erfindungsgemäßes Copolymerisat (70 %) gemäß Beispiel 3 | 15,84 | 30,47 | 6,08 | 12,15 | 15,88 | 30,54 |
| UV-Absorber | 1,33 | 1,33 | 1,33 | 1,33 | 1,33 | 1,33 |
| Radikalfänger | 0,67 | 0,67 | 0,67 | 0,67 | 0,67 | 0,67 |
| Butylglykol (2-n-Butoxyethanol) | 8,30 | 4,13 | 11,04 | 9,30 | 9,69 | 2,19 |
| Cyclohexanon | 1,00 | 1,00 | 1,00 | 1,00 | 1,00 | 1,00 |
| Dimethylethanolamin | 0,06 | 0,04 | 0,11 | 0,11 | - | - |
| Aromatische Sulfonsäure | 0,13 | 0,09 | 0,23 | 0,23 | - | - |
| Melaminharz 98% | 11,75 | 8,71 | 21,70 | 21,70 | - | - |
| Melaminharz 80% in Isobutanol | - | - | - | - | 14,43 | 10,69 |
| Butylglykol | 4,0 | 4,0 | 4,0 | 4,0 | - | 4,0 |
| Demineralisiertes Wasser | 3,54 | 10,93 | 6,62 | 10,96 | 3,50 | 10,91 |
| Acrylatdispersion 49 % (vernetzbar) | 40,89 | 26,12 | 34,72 | 26,04 | 41,01 | 26,17 |
| Demineralisiertes Wasser | 2,0 | 2,0 | 2,0 | 2,0 | 2,0 | 2,0 |
| Siliconhaltiges Verlaufsmittel | 0,50 | 0,50 | 0,50 | 0,50 | 0,50 | 0,50 |
| Demineralisiertes Wasser | 10,0 | 10,0 | 10,0 | 10,0 | 10,0 | 10,0 |
| Summe | 100,0 | 100,0 | 100,0 | 100,0 | 100,0 | 100,0 |
| benötigte Wassermenge in g zum Einstellen auf Spritzviskosität | 5 | 12 | 14 | 17 | 8 | 14 |
| Festkörpergehalt bei Spritzviskosität in % | 42,86 | 40,18 | 39,47 | 38,46 | 41,67 | 39,47 |
| Lösemittelgehalt bei Spritzviskosität in % | 18,10 | 16,96 | 16,67 | 16,24 | 17,59 | 16,67 |
| Haftung (Gitterschnitt) | GT0 | GT0 | GT0 | GT0 | GT0 | GT0 |
| Steinschlag nach VW | KW 1-2 | KW 1 | KW 3 | KW 3 | KW 2 | KW 1-2 |
| Schwitzkasten 240 Std/40°C | i.O. | i.O. | i.O. | i.O. | i.O. | i.O. |
| Glanzgrad | 93% | 91% | 88% | 91% | 92% | 89% |
| Läufergrenze | 50µm | 55µm | 40µm | 45µm | 55µm | 55µm |

KW1 = sehr gut
KW2 = gut
KW3 = brauchbar

GT0 = sehr gut
GT1 = gut

... Fortsetzung Tabelle II

| Beispiel | 16 | 17 | 18 |
|---|---|---|---|
| erfindungsgemäßes Copolymerisat (70 %) | 15,84 (Bsp7) | 15,84 (Bsp8) | 15,84 (Bsp9) |
| UV-Absorber | 1,33 | 1,33 | 1,33 |
| Radikalfänger | 0,67 | 0,67 | 0,67 |
| Butylglykol (2-n-Butoxyethanol) | 8,30 | 8,30 | 8,30 |
| Cyclohexanon | 1,00 | 1,00 | 1,00 |
| Dimethylethanolamin | 0,06 | 0,06 | 0,06 |
| Aromatische Sulfonsäure | 0,13 | 0,13 | 0,13 |
| Melaminharz 98% | 11,75 | 11,85 | 11,75 |
| Melaminharz 80% in Isobutanol | - | - | - |
| Butylglykol | 4,0 | 4,0 | 4,0 |
| Demineralisiertes Wasser | 3,54 | 3,54 | 3,54 |
| Acrylatdispersion 49 % (vernetzbar) | 40,89 | 40,89 | 40,89 |
| Demineralisiertes Wasser | 2,0 | 2,0 | 2,0 |
| Siliconhaltiges Verlaufsmittel | 0,50 | 0,50 | 0,50 |
| Demineralisiertes Wasser | 10,0 | 10,0 | 10,0 |
| Summe | 100,00 | 100,00 | 100,00 |
| benötigte Wassermenge in g zum Einstellen auf Spritzviskosität | 11 | 8 | 4 |
| Festkörpergehalt bei Spritzviskosität in % | 40,54 | 41,67 | 43,27 |
| Lösemittelgehalt bei Spritzviskosität in % | 17,12 | 17,59 | 18,27 |
| Haftung (Gitterschnitt) | GT1 | GT0 | GT0 |
| Steinschlag nach VW | KW2-3 | KW1-2 | KW1 |
| Schwitzkasten 240 Std/$40^{0}C$ | i.O. | i.O. | i.O. |
| Glanzgrad | 85% | 88% | 85% |
| Läufergrenze | 55µm | 50µm | 45µm |

KW1 = sehr gut    GT0 = sehr gut
KW2 = gut    GT1 = gut
KW3 = brauchbar

## Patentansprüche

1. Hydroxylgruppen und Carboxylgruppen enthaltendes, nach Neutralisation mit organischen Basen wasserverdünnbares Copolymerisat auf der Basis von Alkylestern und Hydroxyalkylestern $\alpha,\beta$-ethylenisch ungesättigter Carbonsäuren, wobei die Alkylreste durch ein oder mehrere Sauerstoffatome unterbrochen sein und die Alkylreste der Hydroxylalkylester eine oder mehrere Hydroxylgruppen aufweisen können, $\alpha,\beta$ -ethylenisch ungesättigten Carbonsäuren und gegebenenfalls copolymerisierbare Vinylmonomeren, mit einer Säurezahl von 20 bis 50 und einer OH-Zahl von 40 bis 90, das 0,5 bis 5 Gew.%, bezogen auf das Gewicht der zu seiner Herstellung eingesetzten Monomeren, eines oder mehrerer Perfluoralkylethylester von $\alpha,\beta$-ethylenisch ungesättigten Carbonsäuren mit 6 bis 18 C-Atomen im Alkylteil einpolymerisiert enthält.

**2.** Copolymerisat nach Anspruch 1, **dadurch gekennzeichnet**, daß die $\alpha,\beta$ -ethylenisch ungesättigten Carbonsäuren und die den Estern, Hydroxyalkylestern und Perfluoralkylethylestern zugrundeliegenden $\alpha,\beta$-ethylenisch ungesättigten Carbonsäuren Acrylsäure und/oder Methacrylsäure sind.

**3.** Copolymerisat nach Anspruch 1 oder 2, dadurch gekennzeichnet, daß die Vinylmonomeren aromatische Vinylmonomere sind.

**4.** Copolymerisat nach einem der Ansprüche 1 bis 3, dadurch gekennzeichnet, daß es durch Copolymerisation von 40 - 70 Gew.% eines oder mehrerer Alkylester von $\alpha,\beta$ - ethylenisch ungesättigten Carbonsäuren mit 1 bis 18 C-Atomen im Alkylrest, wobei der Alkylrest durch ein oder mehrere Sauerstoffatome unterbrochen sein kann,

| | |
|---|---|
| 10 - 30 Gew.% | eines oder mehrerer Hydroxylalkylester von $\alpha,\beta$ -ethylenisch ungesättigten Carbonsäuren mit 1 bis 18 C-Atomen im Alkylrest, wobei der Alkylrest durch ein oder mehrere Sauerstoffatome unterbrochen sein kann und eine oder mehrere Hydroxylgruppen aufweist, |
| 3 - 10 Gew.% | $\alpha,\beta$ -ethylenisch ungesättigte Carbonsäure, |
| 0 - 30 Gew.% | Vinylmonomeres, |
| 0,5 - 5 Gew.% | eines oder mehrerer Perfluoralkylethylester von $\alpha,\beta$ -ethylenisch ungesättigten Carbonsäuren mit 4 bis 18 C-Atomen im Alkylrest und |
| 0 - 3 Gew.% | eines drei-, vier- oder polyfunktionellen Radikalketten-Überträgers |

erhalten wurde, wobei sich die angegebenen Gewichtsprozente auf den Festkörper der eingesetzten Monomeren beziehen und auf 100 Gew.-% addieren.

**5.** Copolymerisat nach einem der Ansprüche 1 bis 4, dadurch gekennzeichnet, daß es durch Copolymerisation von 40 - 50 Gew.% eines oder mehrerer Alkylester von $\alpha,\beta$-ethylenisch ungesättigten Carbonsäuren mit 1 bis 18 C-Atomen im Alkylrest, wobei der Alkylrest durch ein oder mehrere Sauerstoffatome unterbrochen sein kann,

| | |
|---|---|
| 10 - 30 Gew.% | eines oder mehrerer Hydroxyalkylester von $\alpha,\beta$-ethylenisch ungesättigten Carbonsäuren mit 1 bis 18 C-Atomen im Alkylrest, wobei der Alkylrest durch ein oder mehrere Sauerstoffatome unterbrochen sein kann und eine oder mehrere Hydroxylgruppen aufweist, |
| 3 - 10 Gew.% | $\alpha,\beta$-ethylenisch ungesättigte Carbonsäure, |
| 20 - 30 Gew.% | Vinylmonomeres, |
| 0,5 - 5 Gew.% | eines oder mehrerer Perfluoralkylethylester von $\alpha,\beta$-ethylenisch ungesättigten Carbonsäuren mit 4 bis 18 C-Atomen im Alkylrest und |
| 0,5 - 3 Gew.% | eines drei, vier- oder polyfunktionellen Radikalketten-Überträgers |

erhalten wurde, wobei sich die angegebenen Gewichtsprozente auf den Festkörper der eingesetzten Monomeren beziehen und auf 100 Gew.-% addieren.

**6.** Copolymerisat nach Anspruch 4 oder 5, dadurch gekennzeichnet, daß die $\alpha,\beta$-ethylenisch ungesättigten Carbonsäuren und die den Alkylestern, Hydroxyalkylestern und Perfluoralkylethylestern zugrundeliegenden $\alpha,\beta$-ethylenisch ungesättigten Carbonsäuren jeweils Acrylsäure und/oder Methacrylsäure sind.

**7.** Copolymerisat nach Anspruch 3, 4, 5 oder 6, dadurch gekennzeichnet, daß das Vinylmonomere Styrol ist.

**8.** Copolymerisat nach Anspruch 4, 5, 6 oder 7, dadurch gekennzeichnet, daß der polyfunktionelle Radikalketten-Überträger auf Basis von Thioglykolsäureestern des Glycerins, Trimethylolpropans oder Pentaerythrits ist.

**9.** Verfahren zur Herstellung der Copolymerisate nach einem der Ansprüche 1 bis 8, dadurch gekennzeichnet, daß man die den Copolymerisaten zugrundeliegenden Monomeren copolymerisiert.

**10.** Verwendung der Copolymerisate gemäß einem der Ansprüche 1 bis 7 in wäßrigen Überzugsmitteln.

**11.** Wäßriges Überzugsmittel, enthaltend ein oder mehrere Copolymerisate gemäß einem der Ansprüche 1 bis 8.

**12.** Wäßriges Überzugsmittel, enthaltend
A) 10 bis 50 Gew.% eines oder mehrerer vernetzbarer Copolymerisate gemäß einem der Ansprüche 1 bis 8, in neutralisierter Form,
B) 30 bis 80 Gew.% eines oder mehrerer vernetzbarer Harze in Form einer wäßrigen Dispersion und
C) 10 bis 50 Gew.% eines oder mehrerer Vernetzer für die Harze der Komponenten A) und B),
sowie gegebenenfalls Lösemittel und lacktübliche Additive, wobei sich die Gewichtsprozente auf den jeweiligen Bindemittel-Festkörpergehalt beziehen.

**13.** Überzugsmittel nach Anspruch 12, dadurch gekennzeichnet, daß das vernetzbare Harz der Komponente B ein Harz auf der Basis von Alkylestern und Hydroxyalkylestern der Acrylsäure und/oder Methacrylsäure, wobei die Alkylreste jeweils 1 bis 18 C-Atome aufweisen können und durch ein oder mehrere Sauerstoffatome unterbrochen sein können und der Hydroxyalkylrest eine oder mehrere Hydroxylgruppen aufweisen kann, Acrylsäure und/oder Methacrylsäure und gegebenenfalls Vinylmonomeren ist.

**14.** Überzugsmittel nach Anspruch 12 oder 13, dadurch gekennzeichnet, daß das Vernetzerharz ein Melaminharz und/oder ein gegebenenfalls blockiertes Polyisocyanat ist.

**15.** Verwendung der wäßrigen Überzugsmittel gemäß einem der Ansprüche 11 bis 14 zur Herstellung von Mehrschichtüberzügen.

**16.** Verwendung der wäßrigen Überzugsmittel gemäß einem der Ansprüche 11 bis 14 zur Herstellung wasserbeständiger Überzüge.

Europäisches Patentamt

# EUROPÄISCHER RECHERCHENBERICHT

Nummer der Anmeldung

**EP 91 11 4489**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-1 952 720 (HYDRON LTD)<br>– – – – – | | C 08 F 220/28<br>C 09 D 133/14 |

| RECHERCHIERTE SACHGEBIETE (Int. Cl.5) |
|---|
| C 08 F |

Der vorliegende Recherchenbericht wurde für alle Patentansprüche erstellt

| Recherchenort | Abschlußdatum der Recherche | Prüfer |
|---|---|---|
| Den Haag | 05 November 91 | CAUWENBERG C.L.M. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument